# EUROPÄISCHE PATENTSCHRIFT

(11) **EP 3 347 423 B1**
(45) Veröffentlichungstag und Bekanntmachung des Hinweises auf die Patenterteilung: **01.01.2020**
(21) Anmeldenummer: 16760655.7
(22) Anmeldetag: 05.09.2016
(51) Int. Cl.: C09J 7/29, G09F 3/10, B32B 7/00, B32B 7/12, B32B 27/28, B32B 27/30, B32B 27/32, B32B 27/08

(54) **EINE MEHRSCHICHTIGE TRÄGERFOLIE AUS KUNSTSTOFF**
MULTI-LAYER CARRIER FILM COMPOSED OF PLASTIC
FILM SUPPORT MULTICOUCHE EN PLASTIQUE

(30) Priorität: 11.09.2015 DE 102015011642
(43) Veröffentlichungstag der Anmeldung: 18.07.2018
(73) Patentinhaber: Infiana Germany GmbH & Co. KG, 91301 Forchheim (DE)
(72) Erfinder: GRIMM, Felix, 91341 Röttenbach (DE); PANHANS, Jürgen, 91056 Erlangen (DE)
(74) Vertreter: Kutzenberger Wolff & Partner
(86) Internationale Anmeldenummer: PCT/EP2016/001497
(87) Internationale Veröffentlichungsnummer: WO 2017/041883

(56) Entgegenhaltungen:
- WO-A1-97/00922
- WO-A1-2005/023541
- WO-A1-2006/041654
- WO-A2-2013/154877
- US-A1- 2006 029 824
- US-A1- 2010 316 843

## Beschreibung

Die vorliegende Erfindung betrifft einen Verbund aus einer Klebstoffschicht (d) und einer mehrschichtigen Kunststofffolie als Trägerfolie umfassend eine Schichtfolge aus einer Außenschicht (a) basierend auf einer Mischung aus α) 3-15 Gew.-%, vorzugsweise 4-12 Gew.-%, eines extrudierbaren Klebstoffs und β) 85-97 Gew.-%, vorzugsweise 88-96 Gew.-%, wenigstens eines C₂-C₈ Olefin/Acrylsäure-Copolymeren oder C₂-C₈ Olefin/Alkylacrylat-Copolymeren, C₂-C₈ Olefin/Methacrylsäure-Copolymeren und/oder C₂-C₈ Alkylmethacrylat-Copolymeren, wobei die Mischung aus α) und β) immer 100 Gew.-% ergeben muss und die beiden Mischungskomponenten α) und β) miteinander kompatibel sein müssen, einer an die Schicht (a) bzw. Schicht (c) angrenzenden Schicht (b) aus wenigstens einem Polyolefin oder einem Olefincopolymeren, vorzugsweise einem C₂-C₆ Polyolefin oder einem Copolymeren aus C₂-C₆ Olefinen, besonders bevorzugt einem C₂-C₃ Polyolefin, einer Schicht (c) aus wenigstens einem Polyolefin oder einem Olefincopolymeren, vorzugsweise einem C₂-C₆ Polyolefin oder einem Copolymeren aus C₂-C₆ Olefinen, besonders bevorzugt einem C₂-C₃ Polyolefin und ggf. üblichen Hilfsstoffen, vorzugsweise Antiblockmitteln, als zweite Außenschicht, und einen klebefähigen Artikel, vorzugsweise ein Klebeband, bestehend aus diesem Verbund.

Es ist bekannt, dass Trägerfolien aus Kunststoff eine ausreichende Haftung zu einer Klebstoffbeschichtung haben müssen, damit nicht nur bei der Handhabung solcher Verbunde wie z.B. bei Klebebändern, sondern auch nach deren Anwendung eine ausreichende Haftung zwischen der Klebstoffschicht und der Trägerfolie gewährleistet ist. Nur dadurch kann bei einer bestimmungsgemäßen Verwendung z.B.solcher Klebebänder eine ausreichende Genauigkeit bzw. lagerfähige Dichtheit erzielt werden.

Um diese notwendige Verbundhaftung zu erreichen, wird üblicherweise auf einer Oberflächenschicht der Trägerfolien eine Corona-, Flamm- oder Plasma-Behandlung durchgeführt und/oder eine Haftvermittlerschicht oder einer Primerschicht aufgebracht, damit die Ablösung der Klebeschicht von der Trägerschicht weitegehend vermieden wird. Hinzu kommt noch, dass solche Haftvermittlerschichten bzw. Primerschichten üblicherweise an das jeweilige zum Einsatz kommende Klebstoffsystem angepasst sind, das meist je nach Hersteller eine unterschiedliche Zusammensetzung aufweist.

Dementsprechend hat es nicht an Versuchen gefehlt, Trägerfolien für Klebstoffbeschichtungen unterschiedlichster Art zur Verfügung zu stellen, ohne dass eine der genannten Vorbehandlungen bzw. eine an das Klebstoffsystem der Klebstoffschicht angepasste Primerbeschichtung oder eine Haftvermittlerschicht notwendig ist, um nicht nur Kosten zu reduzieren, sondern auch den Verbrauch von. fossilen Rohstoffen durch die Bereitstellung entsprechender Polymere für diese Verbindungsschichten zu minimieren.

Für die verbesserte Verbindung polarer und apolarer Schichten in mehrschichtigen Kunststofffolien sind haftvermittelnde Polymerschichten aus der WO 2013/154877 A2 bekannt.

Trotz dieser Versuche besteht nach wie vor ein Bedarf, Kunststofffolien als Trägerfolien zur Verfügung zu stellen, die es ermöglichen, ohne eine Behandlung, wie eine Corona-, Flamm- oder Plasma-Behandlung, ohne Primerschicht oder ohne Haftvermittlerschicht eine ausreichende Verbundhaftung mit einer Klebebeschichtung basierend auf unterschiedlichen Klebstoffsystemen auch bei mechanischer Belastung gemäß bestimmungsgemäßer Anwendung zu gewährleisten.

Diese Aufgabe wird durch das zur Verfügungstellen eines erfindungsgemäßen Verbunds umfassend eine mehrschichtige erfindungsgemäße Kunststofffolie als Trägerfolie für eine Beschichtung aus unterschiedlichen Klebstoffen gelöst.

Die vorliegende Erfindung betrifft daher einen Verbund aus einer Klebstoffschicht (d) und einer mehrschichtigen Kunststofffolie als Trägerfolie für die Klebstoffschicht, vorzugsweise aus unterschiedlichen Klebstoffen, wobei die Trägerfolie eine Schichtfolge umfasst aus
a) einer Außenschicht (a) basierend auf einer Mischung aus α) 3-15 Gew.-%, vorzugsweise 4-12 Gew.-%, wenigstens eines extrudierbaren Klebstoffs und β) 85-97 Gew.-%, vorzugsweise 88-96 Gew.-%, wenigstens eines C₂-C₈ Olefin/Acrylsäure-Copolymeren, C₂-C₈ Olefin/Alkylacrylat-Copolymeren, C₂-C₈ Olefin/Methacrylsäure-Copolymeren und/oder C₂-C₈ Alkylmethacrylat-Copolymeren, wobei die Mischung aus α) und β) immer 100 Gew.-% ergeben muss und die beiden Mischungskomponenten α) und β) miteinander kompatibel sein müssen,
b) einer an die Schicht (a) bzw. Schicht (c) unmittelbar angrenzenden Schicht (b) aus wenigstens einem Polyolefin oder einem Olefincopolymeren, vorzugsweise einem C₂-C₆ Polyolefin oder einem Copolymeren aus C₂-C₆ Olefinen, besonders bevorzugt einem C₂-C₃ Polyolefin,
c) einer Schicht (c) aus wenigstens einem Polyolefin oder einem Olefincopolymeren, vorzugsweise einem C₂-C₆ Polyolefin oder einem Copolymeren aus C₂-C₆ Olefinen, besonders bevorzugt einem C₂-C₃ Polyolefin und ggf. üblichen Hilfsstoffen, vorzugsweise Antiblockmitteln, als zweite Außenschicht.

Zur Herstellung der Schicht (b) der erfindungsgemäßen mehrschichtigen Kunststofffolie geeignete Olefin-Homo- und Copolymere, vorzugsweise thermoplastische Olefin-Homo-oder Copolymere von Ethylen und/oder Propylen, mit weiteren α,β-ungesättigten Olefinen mit 6-10, d.h. 6, 7, 8, 9 oder 10 Kohlenstoffatomen. Geeignete Olefin-Homopolymere sind vorzugsweise ausgewählt aus der Gruppe umfassend Ethylen-Homopolymere (Polyethylene, PE), vorzugsweise LDPE und HDPE, Propylen-Homopolymere (Polypropylene, PP) und Mischungen aus wenigstens zwei der genannten Polymere. Mit "LDPE" werden Polyethylene mit niedriger Dichte bezeichnet, die eine Dichte im Bereich von 0,86-0,93 g/cm³ aufweisen und sich durch einen hohen Verzweigungsgrad der Moleküle auszeichnen. Mit "HDPE" werden Polyethylene hoher Dichte bezeichnet, welche nur eine geringe Verzweigung der Molekülkette aufweisen, wobei die Dichte im Bereich zwischen 0,94 und 0,97 g/cm³ liegen kann. Geeignete Olefin-Copolymere sind vorzugsweise Copolymere von Ethylen und Propylen und Copolymere von Ethylen und/oder Propylen und wenigstens einem α-Olefin mit mindestens 6, vorzugsweise mit 6-10, besonders bevorzugt mit 6-8 Kohlenstoffatomen, ganz besonders bevorzugt Copolymere von Ethylen und/oder Propylen mit wenigstens einem α-Olefin ausgewählt aus der Gruppe umfassend Hexen und Octen, deren Anteil im Olefin-Copolymeren vorzugsweise höchstens 25 mol-%, besonders bevorzugt höchstens 15 mol-%, jeweils bezogen auf das Gesamtgewicht des Olefin-Copolymeren, beträgt. Besonders geeignete Copolymere von Ethylen und wenigstens einem α-Olefin mit mindestens 4 Kohlenstoffatomen sind LLDPE und/oder mPE. Mit "LLDPE" werden lineare Ethylen-Copolymere niedriger Dichte bezeichnet, welche durch das Vorhandensein einer linearen Hauptkette mit daran befindlichen Seitenketten gekennzeichnet sind und eine Dichte im Bereich von 0,86 und 0,94 g/cm³ aufweisen. Mit "mPE" werden Ethylen-Copolymere bezeichnet, die mittels Metallocen-Katalysatoren polymerisiert wurden und vorzugsweise eine Dichte im Bereich von 0,88 und 0,93 g/cm³ aufweisen.

Vorzugsweise basiert die Schicht (b) der erfindungsgemäßen Mehrschichtfolie auf wenigstens einem Ethylen-Homo und/oder -Copolymeren, besonders bevorzugt auf wenigstens einem LDPE, auf wenigstens einem Copolymeren aus Ethylen und Propylen oder auf wenigstens einem Copolymeren aus Ethylen und wenigstens einem α-Olefin mit mindestens 6 Kohlenstoffatomen, vorzugsweise Hexen und/oder Octen wie z.B. mPE.

Die Schicht (c) ist ebenfalls aus wenigstens aus einem Polyolefin oder einem Olefincopolymeren aufgebaut.

Die für die Schicht (b) aufgeführten Polyolefine bzw. Olefincopolymere sind auch zur Herstellung der Schicht (c) geeignet.

Die Schicht (c) kann aus zur Schicht (b) identischen oder unterschiedlichen Polymerkomponenten, vorzugsweise aus identischen Polymerkomponenten, bestehen.

Die Schicht (a) basiert auf einer Mischung von 3 - 15 Gew.-%, 4 - 12 Gew.-%, besonders bevorzugt 5 - 10 Gew.-%, wenigstens eines extrudierbaren Klebstoffs als Mischungskomponente α) und 85 - 97 Gew.-%, vorzugsweise 88 - 96 Gew.-%, besonders bevorzugt 90 - 95 Gew.-%, der Polymerkomponente als Mischungskomponente β), wobei die Mischung aus α) und β) immer 100 Gew.-% ergeben muss.

Die Mischungskomponenten α) und β) müssen miteinander kompatibel sein.

Insbesondere basiert die Schicht (a) der erfindungsgemäßen Kunststofffolie als eine Außenschicht der Trägerfolie auf einer Mischung aus einem extrudierbaren Klebstoff und wenigstens einem C₂-C₈ Olefin/Acrylsäure-Copolymeren und/oder C₂-C₈ Olefin/Alkylacrylat-Copolymeren, C₂-C₈ Olefin/Methacrylsäure-Copolymeren und/oder C₂-C₈ Alkylmethacrylat-Copolymeren.

In einer bevorzugten Ausführungsform ist die Polymer-Komponente β) der Mischung, aus der die Schicht ((a) aufgebaut ist, wenigstens ein Copolymeres aus wenigstens einem Olefin mit 2-4, d.h., 2, 3 oder 4 Kohlenstoffatomen, vorzugsweise mit 2 oder 3 Kohlenstoffatomen, und wenigstens einem weiteren α,β-ungesättigten, nicht-olefinischen Monomeren.

Zur Herstellung solcher Copolymere eignen sich vorzugsweise wenigstens ein Olefin ausgewählt aus der Gruppe umfassend Ethylen und Propylen und wenigstens ein weiteres α,β-ungesättigtes nicht-olefinisches Monomer mit wenigstens einer sauerstoffhaltigen Gruppe, vorzugsweise wenigstens einer Ester- und/oder einer Carbonsäure-Gruppe. Besonders geeignet sind Copolymere aus wenigstens einem Olefin mit 2-4, vorzugsweise mit 2-3, Kohlenstoffatomen und wenigstens einem Monomeren ausgewählt aus der Gruppe umfassend Alkylacrylate, vorzugsweise C₁₋₄-Alkylacrylate, besonders bevorzugt Methylacrylat, Ethylacrylat, n- und Isopropylacrylat, n- und Iso-Butylacrylat, tert.-Butylacrylat, 2-Ethylhexylacrylat, Cyclohexylacrylat und Isobornylacrylat, Acrylsäure und deren Salze, Alkylmethacrylat, vorzugsweise C1-C4 Alkylmethacrylate, besonders bevorzugt Methylmethacrylat, Ethylmethacrylat, n- und Isopropylmethacrylat, n- und IsoButylmethacrylat, ter.-Butylmethacrylat, 2-Ethylheylmethacrylat, Cyclohexylmethacrylat und Isoborylmethycrylat, Methacrylsäure und deren Salze. Besonders bevorzugt ist wenigstens ein α,β-ungesättigtes, nicht-olefinisches Monomer ausgewählt aus der Gruppe umfassend Methylacrylat, n-Butylacrylat, Acrylsäure, Methylmethacrylat, n-Butylmethacrylat und Methacrylsäure.

Vorzugsweise beträgt der Olefin-Anteil in dem Copolymeren aus wenigstens einem Olefin mit vorzugsweise 2-3 Kohlenstoffatomen und wenigstens einem weiteren α,β-ungesättigten, nicht-olefinischen Monomeren der Polymer-Komponente β) der Mischung wenigstens 65 Gew.-%, bevorzugt wenigstens 70 Gew.-%, ganz besonders bevorzugt wenigstens 80 Gew-%.

Vorzugsweise ist die Polymer-Komponente β) der Schicht (a) der erfindungsgemäßen Mehrschichtfolie wenigstens ein Copolymeres aus Ethylen und/oder Propylen und wenigstens einem weiteren α,β-ungesättigten nicht-olefinischen Monomeren ausgewählt aus der Gruppe umfassend Alkylacrylate, vorzugsweise C₁₋₄-Alkylacrylate, Acrylsäure, Alkylmethacrylate, vorzugsweise C₁₋₄ Alkylmethacrylate und Methacrylsäure.

In einer bevorzugten Ausfügungsform basiert die extrudierbare Klebstoffkomponente α) der Mischung, aus der die Schicht (a) aufgebaut ist, auf extrudierbaren Klebstoffsystemen bzw. Klebstoffen basierend auf wenigstens einem Blockcopolymeren aus Styrol und wenigstens einem Olefin, vorzugsweise einem C₂-C₄ Olefin, und einer Klebrigmacherharz-Komponente, wobei die beiden Komponenten α) und β) der Mischung miteinander kompatibel sein müssen. Als Klebstoff kommt vorzugsweise eine Mischung aus einem Styrol-Isopren-Blockcopolymeren mit wenigstens einem Klebrigmacherharz ausgewählt aus der Gruppe Kolophonium, dessen Derivate, ggf. hydrierte Kolophoniumester, Polyterpene, phenolische Terpene und deren Derivate zum Einsatz. Auch andere extrudierbare Klebstoffe auf Kautschukbasis wie z.B. Homo- oder Copolymer von Isobutylen, Vinylacetat, Ethylen, Acrylsäureestern, Butadien oder von Isopren, vorzugsweise auf Basis von Acrylsäureester, Vinylacetat und/oder Isopren ggf. mit einer Klebrigmacherharz-Komponente und weiteren Additiven, können als Klebstoffkomponente α) zum Einsatz kommen, wobei diese Klebstoffkomponenten α) mit der Mischungskomponente β) immer kompatibel und extrudierbar sein müssen.

Die Schichten (b) und (c) der erfindungsgemäßen Kunststofffolie können jeweils dieselben oder unterschiedliche Additive bzw. Hilfsmittel ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Weichmacher, Abstandshalter, Füllstoffe wie CaCO3, Silikate, Wachse, Benetzungsmittel, oberflächenaktive Verbindungen, vorzugsweise Tenside, und Dispergiermittel aufweisen.

Die Schichten der erfindungsgemäßen mehrschichtigen Kunststofffolie können wenigstens 0,01-15 Gew.-%, vorzugsweise wenigstens 0,1-10 Gew.-%, jeweils bezogen auf das Gesamtgewicht einer einzelnen Schicht, wenigstens eines der vorstehend genannten Additive enthalten, wobei die Schicht (c) vorzugsweise wenigstens ein Antiblockmittel enthält.

Gegebenenfalls können die Schicht (b) und die Schicht (c) eine identische Schichtdicke aufweisen. Vorzugsweise weist jedoch die Schicht (c) eine Schichtdicke auf, die um wenigstens 10%, vorzugsweise um bis zu 20% geringer ist als die Schichtdicke der Schicht (b), insbesondere wenn sie mit funktionalisierenden Additiven wie Antiblockmittel versehen ist.

So können die Schichten (b) und (c), gleich oder verschieden, eine Schichtdicke von ≥ 5 µm, vorzugsweise von ≥ 10 µm aufweisen, wobei die Schicht (c) eine Schichtdicke vorzugsweise von 5 - 15 µm und die Schicht (b) eine Schichtdicke von 15 - 60 µm aufweisen kann.

Die erfindungsgemäße Kunststofffolie zeichnet sich durch ein problemloses Abrollen aus dem aufgerollten Zustand trotz Zugabe der Klebstoffkomponente α) in der Schicht (a) aus.

Die erfindungsgemäße, mehrschichtige Kunststofffolie eignet sich insbesondere als Trägerfolie für eine Klebstoffschicht (d), die mit der Schicht (a) direkt ohne eine vorherige Corona-, Flamm- oder Plasma-Behandlung, ohne einen Auftrag einer Haftvermittlerschicht oder ohne einen Auftrag einer Primerschicht mit einer ausgezeichneten Verbundhaftung beschichtet werden kann, wobei diese verwendeten Klebstoffe eine unterschiedliche Zusammensetzung aufweisen können und in einer Vielzahl am Markt erhältlich sind.

Diese Klebstoffschicht (d) basiert auf einem Klebstoff, der unterschiedlich von der Mischungskomponente α) ist.

Dementsprechend kann die Klebstoffschicht (d) auch auf einem extrudierbaren Klebstoff, vorzugsweise Schmelzklebstoff, besonders bevorzugt einem Heißschmelzklebstoff auf Kautschukbasis, basieren. Entsprechende Klebstoffe mit unterschiedlicher Zusammensetzung, die extrudierbar sind, sind am Markt erhältlich.

Dies gilt auch für Klebstoffe auf Acrylatbasis oder Methacrylatbasis, die zur Herstellung der Klebstoffschicht (d) eingesetzt werden können. Zu dieser Klasse von Klebstoffen gehören überwiegend Klebstoffe, die nicht extrudierbar sind.

Erfindungsgemäß werden unter den Begriffen "Klebstoff auf Acrylatbasis" bzw. "Klebstoff auf Methacrylatbasis" Klebstoffe verstanden, deren überwiegende Polymerkomponente ein Acrylat-Homopolymeres und/oder Copolymeres bzw. ein Methacrylat-Homopolymeres und/oder Copolymeres ist.

Besonders bevorzugt basiert die Schicht (d) auf einem Haftklebstoff, der unter Druck bereits bei Umgebungstemperatur eine ausreichende Haftung zu unterschiedlichen Oberflächenmaterialien hat.

Die Herstellung der erfindungsgemäßen Kunststoffolie kann nach bekannten Herstellungsverfahren wie z.B. durch Extrusion oder durch Co-Extrusion erfolgen. Dabei können sowohl einzelne als auch sämtliche Schichten dieser mehrschichtigen Kunststofffolie durch Extrusion, insbesondere durch Blasfolien-Extrusion und/oder Flachfolien-Extrusion (Cast-Extrusion), oder Co-Extrusion, vorzugsweise Blasfolien-Co-Extrusion und/oder Flachfolien-Co-Extrusion (Cast-Co-Extrusion) hergestellt werden, wobei Blasfolien-Co-Extrusion bevorzugt ist. Dabei ist zu beachten, dass im Fall einer Dotierung der Schichten, insbesondere der Schicht (c), mit Additiven, diese durch Abmischen, ggf. als Masterbatch, mit der oder den Polymer-Komponente(n) der jeweiligen Schicht zur Verarbeitung eingesetzt werden. Dieses Abmischen kann in Granulat/Pulver- oder Granulat/Granulat-Form trocken erfolgen. Es ist aber auch möglich, das Additiv dem oder den aufgeschmolzenen Polymer-Komponente(n) der jeweiligen Schicht zuzugeben, vorzugsweise durch Zudosierung in einem für die Extrusion der jeweiligen Schicht verwendeten Extruder.

Bei der Herstellung durch Extrusion werden die den einzelnen Schichten der erfindungsgemäßen Kunststofffolie entsprechenden Schmelzen gleichzeitig und gemeinsam durch eine Runddüse oder eine Flachdüse (co)extrudiert, die so erhaltene Folie bei Nutzung einer Runddüse mittels Luft aufgeblasen und gekühlt oder bei Nutzung einer Flachdüse zur Verfestigung mit Hilfe von Walzen abgezogen und gekühlt.

Die erfindungsgemäße Kunststofffolie wird weder monoaxial, noch biaxial gestreckt (orientiert), so dass sie weder eine monoaxiale, noch biaxiale Orientierung aufweist.

Sofern der Klebstoff der Klebstoffschicht (d) extrudierbar ist, kann diese bereits durch (Co)extrusion aufgebracht werden.

Sofern der Klebstoff nicht extrudierbar ist wird dieser anschließend auf die Schicht (a) der erfindungsgemäßen Folie gegebenenfalls nach Zwischenlagerung aufgetragen.

Die Beschichtung der Schicht (a) der erfindungsgemäßen Kunststofffolie mit Klebstoff kann durch Aufbringen einer Lösung oder einer Dispersion des Klebstoffs ggf. mit einem Vernetzungsmittel in bekannter Weise erfolgen, wobei anschließend durch Trocknung der Beschichtung das Lösungsmittel bzw. das lösungsmittelhaltige bzw. wässrige Dispersionsmittel entfernt wird. Es ist aber auch möglich, vorzugsweise je nach Viskosität des Klebstoffsystems, nur dieses mit Hilfe von geeigneten Beschichtungsvorrichtungen aufzubringen, ohne dass eine anschließende Trocknung des Systems wie bei einem Dispersionsauftrag notwendig ist. Bei jeder dieser zur Beschichtung eingesetzten Systeme kann der Klebstoff auch noch ggf. unter Einwirkung von UV-Bestrahlung bei oder nach der Beschichtung vernetzt werden. Dies kann vorzugsweise beim Aufbringen eines Haftklebstoffs als Klebstoff der Schicht (d) die geeignete Beschichtungsform sein.

Gegenstand der vorliegenden Erfindung ist somit ein Verbund aus einer erfindungsgemäßen, mehrschichtigen Kunststofffolie als Trägerfolie und einer Klebstoffschicht (d) auf der Schicht (a), wobei keine Haftvermittlerschicht oder Primerschicht zwischen den verbundenen Schichten (a) und (d) vorliegt.

Die erfindungsgemäße, mehrschichtige Kunststofffolie kann insbesondere als Trägerfolie zur Herstellung von klebefähigen Artikeln verwendet werden. Vorzugsweise können mit einer Beschichtung der erfindungsgemäßen Trägerfolie mit einer Klebstoffschicht (d) Klebebänder, Klebeetiketten, vorzugsweise selbstklebende Klebebänder oder selbstklebende Etiketten hergestellt werden. Diese Verbunde zeichnen sich nicht nur durch eine ausgezeichnete Verbundhaftung zwischen den Schichten der Trägerfolie und der Klebstoffschicht (d) aus, sondern weisen obendrein eine hohe Feuchtigkeitundurchlässigkeit, insbesondere Wasserundurchlässigkeit, auf. Dadurch ermöglichen die erfindungsgemäßen Verbunde, vorzugsweise Klebebänder, eine ausgezeichnete Dichtheit bei Lagerung sowie bei Verwendung im Außenbereich von Bauten wie Dachdeckungen und anderen Abdichtungen gegen Wettereinflüsse, ohne dass es zu einer Delaminierung zwischen der Trägerfolie und der Klebstoffbeschichtung (d) kommt.

Ein weiterer Gegenstand der vorliegenden Erfindung ist daher ein Klebeband aus einer mehrschichtigen, erfindungsgemäßen Kunststofffolie als Trägerfolie und einer Klebstoffschicht (d) oder ein Klebeetikett aus einer mehrschichtigen erfindungsgemäßen Kunststofffolie als Trägerfolie und einer Klebstoffschicht (d), wobei jeweils die Schicht (a) mit der Klebstoffschicht (d) ohne Haftvermittlerschicht oder Primerschicht direkt verbunden ist und wobei in beiden Fällen vorzugsweise ein Haftklebstoff als selbstklebender Klebstoff für die Schicht (d) eingesetzt ist.

### Schälfestigkeitsprüfung

### 1. Die Schälfestigkeit wurde in Anlehnung an EN ISO 11339 2010 geprüft.

Sie dient zur Feststellung der Verbundhaftung zwischen einer Klebstoffbeschichtung und einer erfindungsgemäßen Trägerfolie bzw. Vergleichsträgerfolie. Um die Schälfestigkeit zwischen Beschichtungen mit unterschiedlichen Klebstoffzusammensetzungen auf diesen Trägerfolien, zu messen, wurden marktgeführte Klebebänder mit Klebstoffbeschichtungen auf Basis von Acrylaten bzw. Kautschuken mit ihrer Klebstoffschicht mit der Schicht (a) der jeweiligen Trägerfolie, wie nachstehend erläutert, verbunden.

Folgende marktgeführten Klebebänder wurden verwendet:
- Tesa A 7475: Acrylat
- Tesa K 7476: Naturkautschuk

### 2. Herstellung der Probestreifen

Auf die jeweilige erfindungsgemäße, mehrschichtige Trägerfolie oder Vergleichsträgerfolie wurde ein Streifen aus einem der aufgeführten Testklebebänder in Maschinenlaufrichtung aufgeklebt. Die Länge des Streifens aus einem Testklebeband betrug 24 cm, wovon 18 cm mit einem Streifen aus der jeweiligen Trägerfolie verklebt und 6 cm unverklebt blieben. Die Breite des Klebebandstreifens betrug 2,5 cm. Für jede Messreihe wurden jeweils drei Streifen aus dem Testklebeband benötigt. Der auf die Schicht (a) der jeweiligen Trägerfolie aufgebrachte Streifen aus dem Testklebeband wurde zunächst mit einer Gummiwalze sanft auf den Streifen der Trägerfolie gedrückt, um Lufteinschlüsse zu vermeiden. Dann wurde jeder dieser so erhaltenen Probestreifen mit einer Finat Rolle 10 (Gewicht: 2 kg) in beiden Laufrichtungen zweimal langsam abgefahren, damit das Eigengewicht der Rolle auf den Probestreifen einwirkt und damit eine gleichmäßige Probevorbereitung gewährleistet ist. Anschließend erfolgte eine Konditionierung der Probestreifen. Dies ist nötig, um durch Druck- und Temperatureinwirkung den Aufbau der maximal erzielbaren Verbundhaftung zwischen Trägerfolie und Klebstoffschicht zu beschleunigen. Der Druckaufbau zur Verbindung der Klebstoffschicht des Testklebebandes mit der jeweiligen Trägerfolie wurde durch Lagerung der jeweiligen Probestreifen zwischen zwei Metallplatten und Gewichten realisiert, wobei auf jeden Probenstreifen ein Druck von 70 g/cm³ für eine Lagerdauer von 20 Stunden bei einer Temperatur von 40 °C ausgeübt wurde. Nach der Lagerung wurden die Probestreifen für ca. 1 Stunde bei Raumtemperatur (23 °C) klimatisiert und anschließend geprüft.

### 3. Durchführung

Die Schälfestigkeitsprüfung erfolgte in Anlehnung an die DIN EN ISO 11339:2010 mit Hilfe einer Zugprüfmaschine Typ 1120.25 der Firma Zwick / Roell. Die Kraft wird an den nicht verklebten Enden des Probestreifens eingeleitet. Hierzu wurden die nicht geklebten Enden der Probstreifen jeweils von einer Klemme fixiert. Die Einspannvorrichtung ist selbstausrichtend, so dass sich bei einer wirksamen Kraft die Klemmen in einer Gerade mit dem Probestreifen bewegen können. In die untere, starre Einspannklemme wurde das Ende des Probenstreifens mit dem Testklebeband eingeklemmt. In der oberen Einspannklemme wurde die zu prüfende Trägerfolie befestigt und von der Klemme senkrecht nach oben abgezogen. Die beiden nicht geklebten Enden wurden somit in entgegengesetzter Richtung befestigt und bildeten eine T-förmige Anordnung. Der Winkel zwischen der Klebeschicht und der Richtung der wirkenden Kraft war nicht fixiert, sondern stellte sich während der Prüfung flexibel ein. Aufgezeichnet wird der Traversenweg in Millimeter als Funktion der erhaltenen Kraft, die in cN/cm angegeben wird. Bei dieser Messmethode wirkt die Kraft linienförmig auf den Probestreifen. Die Traversengeschwindigkeit, d.h. die Abzugsgeschwindigkeit lag bei 10 mm/min. Mit dieser eher langsamen Geschwindigkeit wurde sicher gestellt, dass der Klebstoff sich durch Modifikationsänderungen (plastische Verformung) auf die äußeren Krafteinwirkungen einstellen kann. Die Abzugslänge betrug 75 mm.

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

Alle nachfolgenden %-Angaben sind jeweils Gew.-%, sofern nicht anders beschrieben.
- EBA:: Ethylen/n-Butylacrylat-Copolymeres (16 % BA)
- LDPE:: Polyethylen niedriger Dichte [0,923 g/cm³]
- Multibatch MP 525659: Talkum Masterbatch (PP-Homo mit 60 % Talkum)
- Rem. Weiß RCL: Titandioxid Masterbatch in LDPE
- EAA: Ethylen/Acrylsäure-Copolymeres
- EMA: Ethylen/Methylacrylat-Copolymeres
- Hotmelt BOSTIK M 550: extrudierbarer Heißschmelzklebstoff auf Kautschukbasis der Firma BOSTIK

### II. Herstellung der Trennfolien

Die Trägerfolien der Beispiele bzw. Vergleichsbeispiele bestehen jeweils aus drei Schichten mit den nachstehen angegebenen Zusammensetzungen gemäß Tabelle I und weisen eine Gesamtschichtdicke von jeweils 62 µm auf. Alle Trägerfolien wurden jeweils durch Blasfolien-Co-Extrusion hergestellt. Die Schälfestigkeit der Trägerfolie wurde gemäß der angegebenen Methode zur Bestimmung der Schälfestigkeit gegen die angegebenen, marktgeführten Klebebänder bestimmt.

### III. Zusammensetzungen der Schichten:

**BEISPIEL 1**

| | Rohstoffe Gew.-% | | Dicke |
|---|---|---|---|
| Schicht (a) | EBA | HOTMELT | 12 µm |
| | 90% | 10% | |
| Schicht (b) | LDPE | TiO₂ MASTERBATCH | 48 µm |
| | 84% | 16% | |
| Schicht (c) | LDPE | TALKUM MASTERBATCH | 12 µm |
| | 96% | 4% | |

**VERGLEICHSBEISPIEL 1**

| | Rohstoffe Gew.-% | | Dicke |
|---|---|---|---|
| Schicht (a) | EBA 100 % | | 12 µm |
| Schicht (b) | LDPE | TiO₂ MASTERBATCH | 48 µm |
| | 84% | 16% | |
| Schicht (c) | LDPE | TALKUM MASTERBATCH | 12 µm |
| | 96% | 4% | |

**BEISPIEL 2**

| | Rohstoffe Gew.-% | | Dicke |
|---|---|---|---|
| Schicht (a) | EAA | HOTMELT | 12 µm |
| | 90% | 10% | |
| Schicht (b) | LDPE | TiO₂ MASTERBATCH | 48 µm |
| | 84% | 16% | |
| Schicht (c) | LDPE | TALKUM MASTERBATCH | 12 µm |
| | 96% | 4% | |

**VERGLEICHSBEISPIEL 2**

| | Rohstoffe Gew.-% | | Dicke |
|---|---|---|---|
| Schicht (a) | EAA 100 % | | 12 µm |
| Schicht (b) | LDPE | TiO₂ MASTERBATCH | 48 µm |
| | 84% | 16% | |
| Schicht (c) | LDPE | TALKUM MASTERBATCH | 12 µm |
| | 96% | 4% | |

**Tabelle I**

| **Acrylatkleber** | | | | |
|---|---|---|---|---|
| **Klebstoff von** | **Schicht (a)** | **Gew.-%** | **Schälkraft [cN/cm]** | **Art des Bruches** |
| TESA A 7475 Band (Acrylatkleber) | EBA | 100 | 164,93 | Adhäsiv |
| | EBA/Hotmelt | 90/10 | 269,35 | Adhäsiv |
| | EAA | 100 | 249,17 | Adhäsiv |
| | EAA/Hotmelt | 90/10 | 357,84 | Adhäsiv |

**Tabelle II**

| **Kautschukkleber** | | | | |
|---|---|---|---|---|
| **Klebstoff von** | **Schicht (a)** | **Gew.-%** | **Schälkraft [cN/cm]** | **Art des Bruches** |
| TESA K 7476 Band (Kautschukkleber) | EBA | 100 | 217,28 | Adhäsiv |
| | EBA/Hotmelt | 90/10 | 402,93 | Mischbruch |
| | EAA | 100 | 542,59 | Kohäsiv |
| | EAA/Hotmelt | 90/10 | 551,03 | Kohäsiv |

## Patentansprüche

1. Ein Verbund aus einer Klebstoffschicht (d) und einer mehrschichtigen Kunststofffolie als Trägerfolie umfassend eine Schichtfolge aus
a) einer Außenschicht (a) basierend auf einer Mischung aus a) 3-15 Gew.-%, vorzugsweise 4-12 Gew.-%, eines extrudierbaren Klebstoffs und β) 85-97 Gew.-%, vorzugsweise 88-96 Gew.-%, wenigstens eines C₂-C₈ Olefin/Acrylsäure-Copolymeren, C₂-C₈ Olefin/Alkylacrylat-Copolymeren, C₂-C₈ Olefin/Methacrylsäure-Copolymeren und/oder C₂-C₈ Alkylmethacrylat-Copolymeren, wobei die Mischung aus a) und β) immer 100 Gew.-% ergeben muss und die beiden Mischungskomponenten a) und β) miteinander kompatibel sein müssen,
b) einer Schicht (b) aus wenigstens einem Polyolefin oder einem Olefincopolymeren, vorzugsweise einem C₂-C₆ Polyolefin oder einem Copolymeren aus C₂-C₆ Olefinen, besonders bevorzugt einem C₂-C₃ Polyolefin, wobei die Schicht (b) an die Schicht (a) bzw. Schicht (c) unmittelbar angrenzt,
c) einer Schicht (c) aus wenigstens einem Polyolefin oder einem Olefincopolymeren, vorzugsweise einem C₂-C₆ Polyolefin oder einem Copolymeren aus C₂-C₆ Olefinen, besonders bevorzugt einem C₂-C₃ Polyolefin und ggf. üblichen Hilfsstoffen, vorzugsweise Antiblockmitteln als zweite Außenschicht,
wobei die Schicht (a) unmittelbar mit der Klebstoffschicht (d) verbunden ist und zwischen der Schicht (a) und der Klebstoffschicht (d) keine Haftvermittlerschicht oder Primerschicht vorliegt und die Mischungskomponente a) der Schicht (a) unterschiedlich zu dem Klebstoff der Klebstoffschicht (d) ist.

2. Ein Verbund nach Anspruch 1, **dadurch gekennzeichnet, dass** die Mischungskomponente β) der Schicht (a) wenigstens ein C₂-C₈ Olefin/Acrylat-Copolymeres, ein C₂-C₈ Olefin/Methacrylat-Copolymeres, ein C₂-C₆ Olefin/Acrylsäure-Copolymeres oder ein C₂-C₈ Olefin/Methacrylsäure-Copolymeres mit einem Anteil von 5 bis 30 Gew.-%, vorzugsweise 10-20 Gew.-% Acrylsäure, Alkylacrylat, Methacrylsäure oder Alkylmethacrylat des Copolymeren ist.

3. Ein Verbund nach Anspruch 1 oder 2, **dadurch gekennzeichnet, dass** die Schicht (a) als Mischungskomponente β) wenigstens ein Ethylen/C₂-C₄-Alkylacrylat-Copolymeres und/oder ein Ethylen/Acrylsäure-Copolymeres aufweist.

4. Ein Verbund nach einem der Ansprüche 1 bis 3, **dadurch gekennzeichnet, dass** die Schicht (a) als Mischungskomponente β) wenigstens ein Ethylen/Butylacrylat-Copolymeres oder ein Ethylen/Acrylsäure-Copolymeres aufweist.

5. Ein Verbund nach einem der Ansprüche 1 bis 4, **dadurch gekennzeichnet, dass** die Schicht (a) als Mischungskomponente α) einen extrudierbarer Klebstoff aus einer Mischung aus wenigstens einem Blockcopolymeren aus Styrol und wenigstens einem Olefin, vorzugsweise einem C₂-C₄ Olefin, und einer Klebrigmacherharz-Komponte aufweist.

6. Ein Verbund nach Anspruch 5, **dadurch gekennzeichnet, dass** die Mischungskomponente α) ein Klebstoff, vorzugsweise ein selbstklebender Heißschmelzklebstoff, aus einer Mischung aus einem Styrol-Isopren-Blockcopolymeren und wenigstens einem Klebrigmacherharz ausgewählt aus der Gruppe umfassend Kolophonium, dessen Derivate, gegebenenfalls hydrierte Kolophoniumester, Polyterpene, phenolische Terpene und deren Derivate aufgebaut ist.

7. Ein Verbund nach einem der Ansprüche 1 bis 6, **dadurch gekennzeichnet, dass** die Klebstoffschicht (d) auf einen extrudierbaren Schmelzklebstoff auf Kautschukbasis, vorzugsweise einem Heißschmelzklebstoff, basiert.

8. Ein Verbund nach einem der Ansprüche 1 bis 6, **dadurch gekennzeichnet, dass** die Klebstoffschicht (d) auf einem Klebstoff auf Acrylatbasis basiert.

9. Ein Klebeband, vorzugsweise selbstklebendes Klebeband, bestehend aus dem Verbund nach einem der Ansprüche 1 bis 8.

10. Ein Klebeetikett, vorzugsweise selbstklebendes Klebeetikett, bestehend aus dem Verbund nach einem der Ansprüche 1 bis 8.

11. Ein Klebeband oder Klebeetikett nach Anspruch 9 oder 10, **dadurch gekennzeichnet, dass** die Klebstoffschicht (d) auf einem Haftklebstoff basiert.

## Claims

1. Composite made of an adhesive layer (d) and a multilayer plastics film as backing film comprising a layer sequence made of
a) an external layer (a) based on a mixture of α) from 3 to 15% by weight, preferably from 4 to 12% by weight, of an extrudable adhesive and β) from 85 to 97% by weight, preferably from 88 to 96% by weight, of at least one C₂-C₈ olefin/acrylic acid copolymer, C₂-C₈ olefin/alkyl acrylate copolymer, C₂-C₈ olefin/methacrylic acid copolymer and/or C₂-C₈ alkyl methacrylate copolymer, where the mixture of α) and β) must always amount to 100% by weight and the two mixture components α) and β) must be mutually compatible,
b) a layer (b) made of at least one polyolefin or one olefin copolymer, preferably a C₂-C₆ polyolefin or a copolymer of C₂-C₆ olefins, particularly preferably a C₂-C₃ polyolefin, where the layer (b) is immediately adjacent to the layer (a) and, respectively, layer (c),
c) as second external layer, a layer (c) made of at least one polyolefin or one olefin copolymer, preferably a C₂-C₆ polyolefin or a copolymer of C₂-C₆ olefins, particularly preferably a C₂-C₃ polyolefin and optionally of conventional auxiliaries, preferably antiblocking agents, where the layer (a) has direct connection to the adhesive layer (d) and no adhesion-promoter layer or primer layer is present between the layer (a) and the adhesive layer (d) and the mixture component α) of the layer (a) is different from the adhesive of the adhesive layer (d).

2. Composite according to Claim 1, **characterized in that** the mixture component β) of the layer (a) is at least one C₂-C₈ olefin/acrylate copolymer, one C₂-C₈ olefin/methacrylate copolymer, one C₂-C₆ olefin/acrylic acid copolymer or one C₂-C₈ olefin/methacrylic acid copolymer with a proportion of from 5 to 30% by weight, preferably from 10 to 20% by weight, of acrylic acid, alkyl acrylate, methacrylic acid or alkyl methacrylate in the copolymer.

3. Composite according to Claim 1 or 2, **characterized in that** the layer (a) has, as mixture component β), at least one ethylene/C₂-C₄-alkyl acrylate copolymer and/or one ethylene/acrylic acid copolymer.

4. Composite according to any of Claims 1 to 3, **characterized in that** the layer (a) has, as mixture component β), at least one ethylene/butyl acrylate copolymer or one ethylene/acrylic acid copolymer.

5. Composite according to any of Claims 1 to 4, **characterized in that** the layer (a) has, as mixture component α), an extrudable adhesive made of a mixture of at least one block copolymer of styrene and at least one olefin, preferably a C₂-C₄ olefin, and of a tackifier resin component.

6. Composite according to Claim 5, **characterized in that** the mixture component α) is an adhesive, preferably a self-adhesive hotmelt adhesive, made of a mixture of a styrene-isoprene block copolymer and of at least one tackifier resin selected from the group comprising kolophonium, derivatives thereof, optionally hydrogenated kolophonium esters, polyterpenes, phenolic terpenes and derivatives thereof.

7. Composite according to any of Claims 1 to 6, **characterized in that** the adhesive layer (d) is based on an extrudable rubber-based melt adhesive, preferably a hotmelt adhesive.

8. Composite according to any of Claims 1 to 6, **characterized in that** the adhesive layer (d) is based on an acrylate-based adhesive.

9. Adhesive tape, preferably self-adhesive adhesive tape, composed of the composite according to any of Claims 1 to 8.

10. Adhesive label, preferably self-adhesive adhesive label, composed of the composite according to any of Claims 1 to 8.

11. Adhesive tape or adhesive label according to Claim 9 or 10, **characterized in that** the adhesive layer (d) is based on a pressure-sensitive adhesive.

## Revendications

1. Composite constitué par une couche d'adhésif (d) et un film en matière plastique multicouche en tant que film support, comprenant une succession de couches constituée par :
a) une couche extérieure (a) à base d'un mélange d'α) 3 à 15 % en poids, de préférence 4 à 12 % en poids, d'un adhésif extrudable, et de β) 85 à 97 % en poids, de préférence 88 à 96 % en poids, d'au moins un copolymère d'oléfine en C₂-C₈/acide acrylique, un copolymère d'oléfine en C₂-C₈/acrylate d'alkyle, un copolymère d'oléfine en C₂-C₈/acide méthacrylique et/ou un copolymère de méthacrylate d'alkyle en C₂-C₈, le mélange d'α) et de β) devant toujours résulter en 100 % en poids, et les deux composants de mélange α) et β) devant être compatibles l'un avec l'autre,
b) une couche (b) constituée par au moins une polyoléfine ou un copolymère d'oléfines, de préférence une polyoléfine en C₂-C₆ ou un copolymère d'oléfines en C₂-C₆, de manière particulièrement préférée une polyoléfine en C₂-C₃, la couche (b) étant directement adjacente à la couche (a) ou à la couche (c),
c) une couche (c) constituée par au moins une polyoléfine ou un copolymère d'oléfines, de préférence une polyoléfine en C₂-C₆ ou un copolymère d'oléfines en C₂-C₆, de manière particulièrement préférée une polyoléfine en C₂-C₃, et éventuellement des adjuvants usuels, de préférence des agents antiblocage, en tant que deuxième couche extérieure,
la couche (a) étant directement reliée avec la couche d'adhésif (d), et aucune couche de promoteur d'adhésion ou couche d'agent primaire n'étant présente entre la couche (a) et la couche d'adhésif (d), et le composant de mélange α) de la couche (a) étant différent de l'adhésif de la couche d'adhésif (d).

2. Composite selon la revendication 1, **caractérisé en ce que** le composant de mélange β) de la couche (a) est au moins un copolymère d'oléfine en C₂-C₈/acrylate, un copolymère d'oléfine en C₂-C₈/méthacrylate, un copolymère d'oléfine en C₂-C₆/acide acrylique ou un copolymère d'oléfine en C₂-C₈/acide méthacrylique ayant une proportion de 5 à 30 % en poids, de préférence de 10 à 20 % en poids, d'acide acrylique, d'acrylate d'alkyle, d'acide méthacrylique ou de méthacrylate d'alkyle du copolymère.

3. Composite selon la revendication 1 ou 2, **caractérisé en ce que** la couche (a) comprend en tant que composant de mélange β) au moins un copolymère d'éthylène/acrylate d'alkyle en C₂-C₄ et/ou un copolymère d'éthylène/acide acrylique.

4. Composite selon l'une quelconque des revendications 1 à 3, **caractérisé en ce que** la couche (a) comprend en tant que composant de mélange β) au moins un copolymère d'éthylène/acrylate de butyle ou un copolymère d'éthylène/acide acrylique.

5. Composite selon l'une quelconque des revendications 1 à 4, **caractérisé en ce que** la couche (a) comprend en tant que composant de mélange α) un adhésif extrudable constitué par un mélange d'au moins un copolymère séquencé de styrène et d'au moins une oléfine, de préférence une oléfine en C₂-C₄, et un composant résine collante.

6. Composite selon la revendication 5, **caractérisé en ce que** le composant de mélange α) est un adhésif, de préférence un adhésif thermofusible autocollant, formé par un mélange d'un copolymère séquencé de styrène-isoprène et d'au moins une résine collante choisie dans le groupe comprenant le colophane, ses dérivés, les esters de colophane éventuellement hydrogénés, les polyterpènes, les terpènes phénoliques et leurs dérivés.

7. Composite selon l'une quelconque des revendications 1 à 6, **caractérisé en ce que** la couche d'adhésif (d) est à base d'un adhésif fusible extrudable à base de caoutchouc, de préférence d'un adhésif thermofusible.

8. Composite selon l'une quelconque des revendications 1 à 6, **caractérisé en ce que** la couche d'adhésif (d) est à base d'un adhésif à base d'acrylate.

9. Bande adhésive, de préférence bande adhésive autocollante, constituée par le composite selon l'une quelconque des revendications 1 à 8.

10. Étiquette adhésive, de préférence étiquette adhésive autocollante, constituée par le composite selon l'une quelconque des revendications 1 à 8.

11. Bande adhésive ou étiquette adhésive selon la revendication 9 ou 10, **caractérisée en ce que** la couche d'adhésif (d) est à base d'un adhésif sensible à la pression.
